Europäisches Patentamt

European Patent Office

Office européen des brevets

(11) Veröffentlichungsnummer : **0 088 973**
**B1**

(12) # EUROPÄISCHE PATENTSCHRIFT

(45) Veröffentlichungstag der Patentschrift :
**11.12.85**

(51) Int. Cl.⁴ : **C 01 B 13/11,** H 01 T 19/00,
B 01 J 19/08

(21) Anmeldenummer : **83102193.6**

(22) Anmeldetag : **05.03.83**

(54) **Schaltungsanordnung zum impulsförmigen Betreiben eines oder mehrerer Hochfrequenz-Ozonisatoren.**

(30) Priorität : **12.03.82 DE 3208895**

(43) Veröffentlichungstag der Anmeldung :
**21.09.83 Patentblatt 83/38**

(45) Bekanntmachung des Hinweises auf die Patenterteilung : **11.12.85 Patentblatt 85/50**

(84) Benannte Vertragsstaaten :
**AT BE CH FR GB IT LI LU NL SE**

(56) Entgegenhaltungen :
**DE-A- 3 108 563**
**US-A- 4 156 638**
**US-A- 4 306 271**

(73) Patentinhaber : **Gesslauer, Rudolf**
**Waldstrasse 6**
**D-3501 Schauenburg (DE)**

(72) Erfinder : **Gesslauer, Rudolf**
**Waldstrasse 6**
**D-3501 Schauenburg (DE)**

(74) Vertreter : **Freiherr von Schorlemer, Reinfried**
**Brüder-Grimm-Platz 4**
**D-3500 Kassel (DE)**

**Beschreibung**

Zur Aufbereitung und Entkeimung von Wasser, insbesondere Trinkwasser, kann außer Chlor und anderen Chemikalien vor allem auch Ozon eingesetzt werden. Es sind daher bereits zahlreiche Wasseraufbereitungsanlagen bekannt, die Ozonisatoren zur Erzeugung von Ozon aufweisen und gegenüber herkömmlichen, mit Chlor betriebenen Anlagen viele Vorteile besitzen. Nachteilig an ihnen ist, daß sie bisher nahezu ausschließlich als stationäre Großanlagen Anwendung finden, die nicht nur einen erheblichen Herstellungsaufwand und entsprechend hohe Gestehungskosten verursachen, sondern auch den Einsatz von geschultem Bedienungspersonal und daher hohe Folgekosten erfordern. Entsprechendes gilt für Anlagen, in denen Ozon für andere Zwecke eingesetzt wird.

Einen besonders wichtigen Bestandteil einer wirkungsvollen Aufbereitungsanlage bildet der Ozonisator, der aus einem Gasentladungsrohr besteht, in dem durch eine stille Entladung Ozon erzeugt wird. Das Gasentladungsrohr enthält zwei rohrförmige, koaxial angeordnete Elektroden, deren einander zugewandte Oberflächen eine Entladungszone begrenzen, in deren Bereich wenigstens eine Elektrode mit einem dielektrischen Überzug aus Glas oder Keramik versehen ist und von denen eine geerdet ist und die andere an eine Hochspannung gelegt wird.

Zum Erzeugen der Hochspannung und zum Betreiben derartiger Ozonisatoren werden bisher zwei Arten von Schaltungsanordnungen verwendet. Nach einem bekannten Vorschlag (DE-OS 26 20 540) wird eine von einem Netzteil gelieferte Gleichspannung mittels eines Thyristors und eines mit dessen Steuerelektrode verbundenen Schwingkreises in elektrische Impulse umgewandelt. Diese Impulse werden der Primärspule eines Hochspannungstransformators, beispielsweise eines Spartransformators (auto-transformer), zugeführt, dessen Sekundärseite mit den Elektroden des Ozonisators verbunden ist. Die andere bekannte Schaltungsanordnung (DE-AS 26 10 809) enthält zur Erzeugung der erforderlichen Hochspannung einen Hochspannungs-Impulsgenerator und zwei Hochspannungs-Netzteile.

Beim gleichzeitigen Betreiben einer Vielzahl von Ozonisatoren ist es erwünscht, die Schaltungsanordnung so auszubilden, daß sie durch individuelle Einstellung des Tastverhältnisses, d. h. dem Quotienten aus der Impulsbreite und der Impulsfolgedauer der erzeugten Impulse, individuell angepaßt werden kann, um alle Ozonisatoren mit dem jeweils günstigen Wirkungsgrad betreiben zu können. Diese Forderung ist vor allem eine Folge davon, daß die Gasentladungsrohre bei der Herstellung sehr unterschiedlich ausfallen und daher die Ozonausbeute jedes Ozonisators beim Anschluß an eine normierte Schaltungsanordnung sehr unterschiedlich sein kann. Bei Anwendung der zuerst genannten Schaltungsanordnung (DE-OS 26 20 540) ist eine derartige Anpassung nicht möglich. Die andere Schaltungsanordnung (DE-AS 26 10 809) enthält zwar einen Impulsgenerator mit einstellbarem Tastverhältnis, das zur Anpassung der Schaltungsanordnung an den im Einzelfall verwendeten Ozonisator individuell eingestellt werden könnte. Derartige Schaltungsanordnungen sind jedoch einerseits sehr aufwendig und wegen der hohen Kosten allenfalls für Großanlagen geeignet. Andererseits bestehen bei Anwendung mehrerer Ozonisatoren nur die beiden Möglichkeiten, entweder für jeden einzelnen Ozonisator eine separate Schaltungsanordnung vorzusehen, um mit Hilfe jedes Impulsgenerators das Tastverhältnis individuell einzustellen, oder alle Ozonisatoren mit derselben Schaltungsanordnung zu betreiben. Im ersten Fall würden die Herstellungskosten weiter erhöht, was nicht vertretbar ist, während im zweiten Fall keine individuelle Einstellung des Tastverhältnisses möglich wäre, so daß zumindest ein Teil der Ozonisatoren mit einem ungünstigen Wirkungsgrad betrieben werden.

Infolge dieser Entwicklung sind bisher einerseits stationäre Großanlagen bekannt, die mit viel technischem und wirtschaftlichem Aufwand installiert und betrieben werden müssen, während andererseits kleinere und mittlere Anlagen, wie sie beispielsweise für Kleinschwimmbäder, Fischzuchtbecken oder transportable Trinkwasseraufbereitungseinrichtungen erwünscht sind, ausschließlich mit Schaltungsanordnungen betrieben werden, die Hochspannungstransformatoren aufweisen und keine Optimierung des Wirkungsgrades der Ozonisatoren ermöglichen.

Die Erfindung geht daher von einer Schaltungsanordnung zum impulsförmigen Betreiben von einem oder mehreren Hochfrequenz-ozonisatoren aus, die wenigstens ein eine Gleichspannung erzeugendes Netzteil, eine der Zahl der Ozonisatoren entsprechende Anzahl von Schaltkreisen zur Ableitung von elektrischen Impulsen aus der Gleichspannung und eine der Zahl der Ozonisatoren entsprechende Anzahl von Hochspannungstransformatoren aufweist, denen primärseitig die von je einem der Schaltkreise erzeugten Impulse zugeführt werden und die sekundärseitig mit je einem Ozonisator verbunden ist.

Der Erfindung liegt die Aufgabe zugrunde, diese Schaltungsanordnung so weiterzubilden, daß sie unter Einsatz handelsüblicher und daher preisgünstiger Bauteile eine einfache und optimale Anpassung an die im Einzelfall verwendeten Ozonisatoren unter Berücksichtigung der erwünschten Ozonmengen ermöglicht, insbesondere für Ozonisatoren kleinerer und mittlerer Leistung bis etwa zehn Gramm Ozon pro Stunde geeignet ist und durch modulförmige Erweiterung den Anschluß einer Vielzahl von Ozonisatoren und damit eine entsprechende Multiplikation der erzeugbaren Ozonmenge gestattet.

Zur Lösung dieser Aufgabe ist die Erfindung dadurch gekennzeichnet, daß die Schaltkreise je eine durch einen Oszillator getriggerte Impulsbreitensteuerung enthalten.

Die Erfindung bringt mehrere Vorteile mit sich. Aufgrund der Anwendung eines Hochspannungstransformators, z. B. nach Art eines Fernseh-Zeilentransformators, steht für das Bauteil, das bei herkömmlichen Anlagen kleinerer und mittlerer Leistung besonders störanfällig ist, ein millionenfach bewährtes Serienbauteil zur Verfügung, bei dem lediglich die Primärspule an die im Einzelfall zur Verfügung stehende bzw. erwünschte Spannung angepaßt werden braucht und das den ungestörten Dauerbetrieb der gesamten Ozonanlage sicherstellt. Die taktweise bzw. impulsförmige Ansteuerung des Hochspannungstransformators führt zu einer hohen Flankensteilheit der nahezu rechteckförmigen Impulse und damit auch zu einer schnellen Umladung der Gasentladungsröhre bei verhältnismäßig geringer Spannung und ermöglicht dadurch eine hohe Energieausbeute in bezug auf die Ozonerzeugung, d. h. einen hohen Wirkungsgrad. Weiterhin ist es möglich, über die Impulsbreite die Aufladung jedes einzelnen Hochspannungstransformators zu variieren und damit die abgegebene Energiemenge individuell zu dosieren, was bisher nur über eine Änderung der Spannungsamplitude oder für alle Ozonisatoren in gleicher Weise möglich ist. Vorteilhaft ist ferner, daß das Netzteil lediglich eine Gleichspannung liefern braucht. Schließlich ermöglichen die Impulsbreitensteuerungen eine optimale Einstellung der Wirkungsgrade aller zur Verfügung stehender Ozonisatoren, während gleichzeitig eine Veränderung der erzeugten Ozonmengen durch Änderung der Ausgangsspannung des Netzteils vorgenommen werden kann.

Weitere vorteilhafte Merkmale der Erfindung ergeben sich aus den Unteransprüchen.

Die Erfindung wird nachfolgend in Verbindung mit der beiliegenden Zeichnung an einem Ausführungsbeispiel näher erläutert. Es zeigen :

Figur 1 schematisch das Schalbild einer erfindungsgemäßen Schaltungsanordnung ; und

Figur 2 schematisch die Impulsformen der an ausgewählten Punkten der Schaltungsanordnung nach Fig. 1 beim Betrieb auftretenden Impulse.

Die Schaltungsanordnung enthält ein Netzteil 1, das je nach den erforderlichen Umständen aus einer beliebigen Eingangsspannung von beispielsweise 220 V/50 Hz, 115 V/60 Hz oder 12 V/Gleichspannung eine stabilisierte Ausgangsgleichspannung $U_A$ liefert, die mit einem Einstellpotentiometer 2 beispielsweise auf Werte von 130 V bis 160 V eingestellt werden kann. Die Gleichspannung $U_A$ dient zur Speisung einer Leistungsstufe 3, die einen Hochspannungstransformator 4, eine aus einem elektronischen Schalter 5 und einem Monoflop 6 gebildete Impulsbreitensteuerung und einen Widerstand 7 enthält und von einem Oszillator 8 mit einer

Ausgangsfrequenz von beispielsweise 10 kHz getaktet bzw. getriggert wird. Beim dargestellten Ausführungsbeispiel wird die Gleichspannung $U_A$ dem einen Anschluß der Primärwicklung des Hochspannungstransformators 4 zugeführt, während der andere Anschluß der Primärwicklung mit dem Kollektor eines den Schalter 5 bildenden Schalttransistors verbunden ist, dessen Emitter über den Widerstand 7 mit dem Minuspol des Netzteils verbunden ist. Die Basis des Schalttransistors ist mit dem Setzausgang Q des Monoflops 6 verbunden, dessen Takteingang T an den Ausgang des Oszillators 8 angeschlossen und dessen Schaltzeit veränderbar ist. Der Emitter des Schalttransistors ist außerdem mit dem Rücksetzeingang R des Monoflops 6 verbunden.

Die Sekundärwicklung des Hochspannungstransformators 4 ist mit den Elektroden eines nur schematisch dargestellten Ozonators 9 verbunden. Die Außenwandung des Gasentladungsrohrs des Ozonisators 9 ist von einem nicht dargestellten Aluminium-Kühlkörper mit entsprechend großer Oberfläche umgeben. Die Kühlung erfolgt durch einen Lüfter 10, der Raumluft ansaugt und die Kühlluft an den Kühlkörper abgibt. Im Kühlluftstrom hinter dem Kühlkörper ist ein Temperaturfühler 11 angeordnet, der mit einem Steueranschluß des Netzteils 1 verbunden ist.

Der Hochspannungstransformator 4 besteht beispielsweise aus einem in der Fernsehtechnik üblicherweise verwendeten Zeilentransformator mit einer entsprechend angepaßten Primärwicklung, während die Hochspannungswicklung und der Ferritkern die handelsübliche Form beibehalten. Während beim Fernsehen der Primärwicklung üblicherweise eine 330 V/15,6 kHz-Spannung zugeführt und der Sekundärwicklung eine 12 kV/15,6 kHz-Spannung entnommen wird, ist die Primärwicklung des erfindungsgemäß eingesetzten Hochspannungstransformators 4 derart angepaßt, daß sie die vom Netzteil 1 abgegebene Spannung in eine Hochspannung von etwa 3000 V mit der Frequenz des Oszillators 8 von 10 kHz umwandelt. Bei einer Ausgangsgleichspannung von 130 bis 160 V am Netzteil 1 wird daher z. B. in einen Zeilentransformator üblicher Bauart eine Primärspule mit ca. 40 Windungen eingesetzt.

Die Betriebsweise der beschriebenen Schaltungsanordnung ist wie folgt :

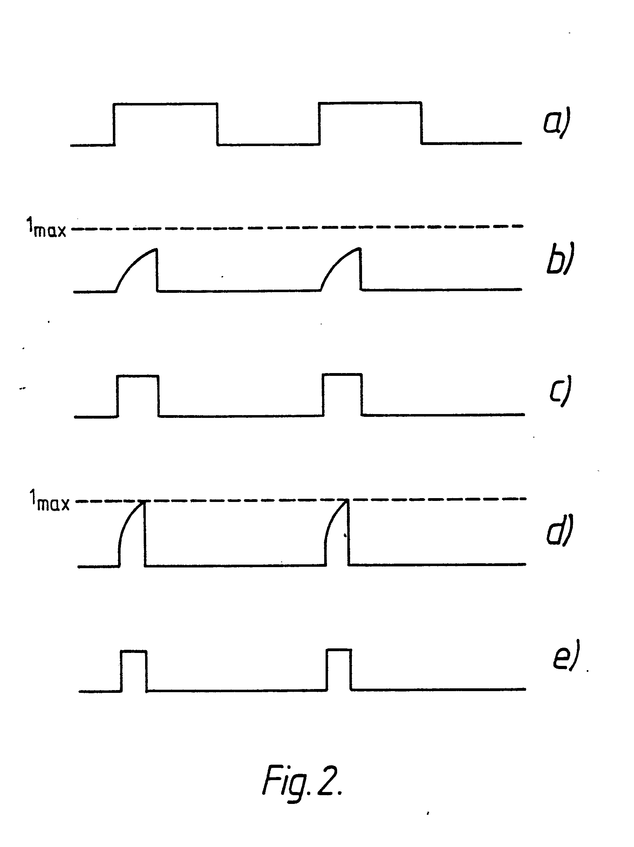

Nach dem Einschaltvorgang liegt einerseits die Gleichspannung $U_A$ an der Primärwicklung des Hochspannungstransformators 4 an, während andererseits der Oszillator 8 Rechteckimpulse entsprechend der Impulsform a) in Fig. 2 abgibt. Die Anstiegsflanken dieser Rechteckimpulse lösen am Ausgang Q des Monoflops Rechteckimpulse definierter Länge (z. B. etwa 30 μs) entsprechend Impulsform c) in Fig. 2 aus. Die Rechteckimpulse des Monoflops 6 steuern den Schalter 5, der den Stromfluß durch die Primärspule entsprechend der Impulsform b) in Fig. 2 sperrt bzw. freigibt, wodurch Energie in den Ferritkern bzw. in die Sekundärwicklung des Hochspannungstransformators 4 übertragen wird. Die so erzeugte Hochspannung von etwa 3 kV dient zur Ausbildung einer stillen Entladung im Gasentladungsrohr des Ozonisators 9, so daß ein Teil der diesen in Pfeilrichtung durchströmenden getrockneten Luft in Ozon umgewandelt wird. Steigt der Stromfluß durch die Primärwicklung aufgrund unnormaler Umstände, z. B. aufgrund von Kurzschlüssen oder Überschlägen auf der Hochspannungsseite, über einen vorher festgelegten Maximalwert $I_{max}$ (Fig. 2) an, so werden durch die an dem Widerstand 7 abfallende Spannung eine vorzeitige Rücksetzung des Monoflops 6 und dadurch eine sofortige Beendigung der Energiezufuhr entsprechend Kurve e) in Fig. 2 bewirkt, d. h. die vorher festgelegte Impulsbreite wird derart verringert, daß der Strom durch die Primärspule gemäß Kurve d) in Fig. 2 unter dem Wert $I_{max}$ bleibt. Die Leistungsstufe wird dadurch vor Überlastung geschützt.

Bei konstantem Luftdurchsatz durch den Ozonisator 4 und bei konstanter Gleichspannung $U_A$ ist die erzeugte Ozonmenge pro Stunde konstant. Voraussetzung dabei ist jedoch, daß sich die Temperatur des Ozonisators 9 nicht wesentlich ändert, weil mit steigender Temperatur die Rekombinationsrate von Ozon zu Sauerstoff zu- und damit die erzeugte Ozonmenge abnimmt. Die Temperatur des Ozonisators ändert sich jedoch sowohl in Abhängigkeit davon, ein wie großer Teil der im Ozonisator frei werdenden Energie in Wärme umgesetzt wird, als auch vor allem in Abhängigkeit von der Umgebungstemperatur und dem durch den Lüfter 10 bewirkten Strömungsverhalten des Kühlluftstroms. Um dennoch eine Konstanthaltung der erzeugten Ozonmenge pro Stunde zu ermöglichen, ist das Netzteil 1 regelbar ausgebildet und mit einem Steuereingang zum Anschluß des Temperaturfühlers 11 versehen. Die Regelung erfolgt in der Weise, daß die Gleichspannung $U_A$ bei Zunahme der Ablufttemperatur erhöht, bei Abnahme der Ablufttemperatur dagegen verringert wird. Der Temperaturfühler 11 und das Netzteil sind somit Teile eines Reglers mit der Ozonmenge als Regelgröße.

Bei dieser Art der Regelung müßte eine einmalige Erhöhung bzw. Verminderung der Ablufttemperatur wegen der damit verbundenen Vergrößerung bzw. Verkleinerung der Gleichspannung $U_A$ und der entsprechend vergrößerten oder verkleinerten Wärmeabgabe des Ozonisators eigentlich ein lawinenartiges Anwachsen oder Absinken der Gleichspannung $U_A$ zur Folge haben. Es hat sich jedoch gezeigt, daß bei guter Kühlung (z. B. 25 m³/h pro Ozonisator) ein derartiger Lawineneffekt nicht eintritt, weil die durch Vergrößerung oder Verkleinerung der Gleichspannung $U_A$ im Ozonisator 9 hervorgerufene Temperaturänderung offensichtlich nicht ausreicht, um am Ort des Temperaturfühlers 11 eine wesentliche Temperaturänderung herbeizuführen.

Wird eine maximale Kühllufttemperatur von z. B. 50° überschritten, beispielsweise durch Ausfall eines Lüfters, kann die eingestellte Ozonmenge selbst bei Einstellung der Gleichspannung $U_A$ auf ihren Höchstwert nicht mehr erreicht werden. In diesem Fall spricht ein beispielsweise am Kühlkörper des Ozonisators 4 angebrachter Thermoschalter an, der die gesamte Schaltungsanordnung abschaltet und im Bedarfsfall eine Alarmeinrichtung od. dgl. einschaltet.

Die vom Ozonisator 4 gelieferte Ozonmenge kann durch Verstellung des Einstellpotentiometers 2 von beispielsweise 30 % bis 100 % der Nennleistung stufenlos eingestellt werden.

Aufgrund der relativ großen Betriebsfrequenz von etwa 10 kHz und der steilen Flanken der Hochspannung ist einerseits der Wirkungsgrad der Ozonerzeugung, d. h. die pro Energieeinheit gewonnene Ozonmenge vergleichsweise groß, während andererseits im Vergleich zu den herkömmlichen 50 Hz-Anlagen bei gleicher Leistung eine Hochspannung von nur 3 kV im Vergleich zu 10 bis 20 kV benötigt wird. Hierdurch ergibt sich der besondere Vorteil, daß zur Erzeugung einer Ozonmenge von beispielsweise 10 g/h vergleichsweise klein dimensionierte Gasentladungsröhren (etwa 20 × 200 mm) ausreichen, was einerseits eine problemlose Luftkühlung und andererseits die Anwendung von Keramik anstatt Glas als Dielektrikum ermöglicht. Beides ist bei in herkömmlicher Weise betriebenen Gasentladungsröhren dieser Leistung wegen der zu großen Abmessungen nicht möglich. Keramik hat außerdem den Vorteil, daß sie mit besseren Wärmeleitzahlen und höheren Dielektrizitätskonstanten im Vergleich zu Glas hergestellt werden kann, wobei die günstigere Wärmeleitzahl die Kühlung durch Luft noch stärker begünstigt, während die größere Dielektrizitätskonstante eine noch weitere Verringerung der benötigten Hochspannung bei gleichzeitiger Erhöhung der Stabilität des Gasentladungsrohrs aufgrund größerer Wandstärken ermöglicht.

Wegen der hohen Betriebsfrequenz von etwa 10 kHz ist es weiterhin möglich, den Ferritkern und die Hochspannungswicklung eines üblichen Fernseh-Zeilentransformators zu verwenden. Da die Hochspannungswicklung im Fernsehgerät eine Spannung von etwa 12 kV, in der beschriebenen Schaltungsanordnung dagegen nur von etwa 3 kV liefern muß, ist die Betriebssicherheit außerordentlich groß und noch weit größer als beim Fernsehen. Die Windungszahl der Hochspannungswicklung des Zeilentransformators liegt bei etwa eintausend, was einem Windungs/Spannungs-Verhältnis von etwa 0,3 : 1 entspricht. Deshalb werden nur wenige Lagen aus relativ dickem Draht benötigt. Außerdem ist der gesamte Hochspannungstransformator klein, leicht und als Massenartikel preisgünstig.

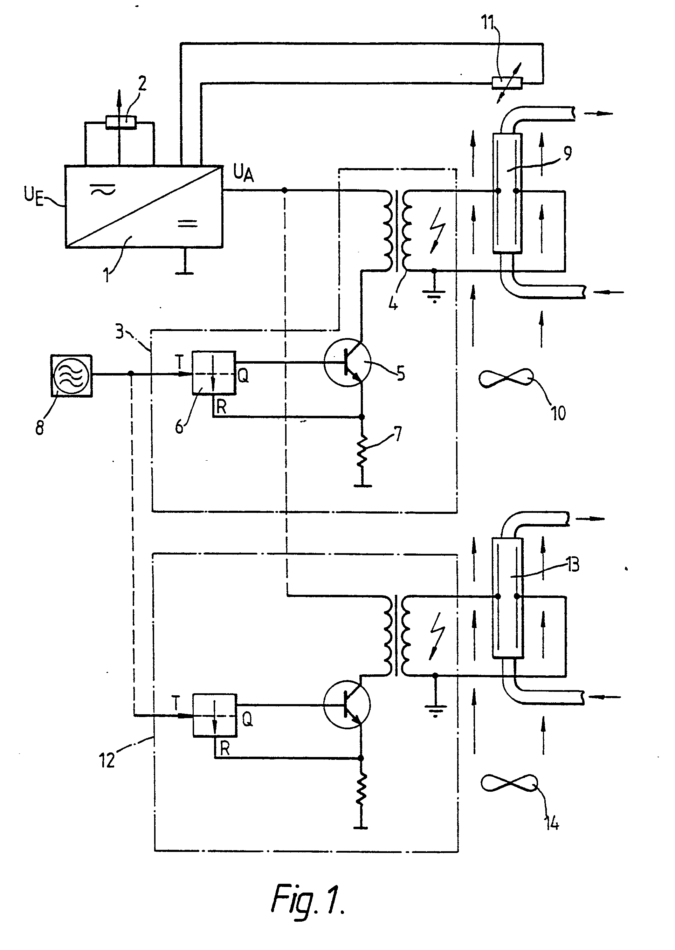

Gemäß einer besonders bevorzugten Ausführungsform der Erfindung enthält die Schaltungsanordnung nach Fig. 1 zusätzlich zur Leistungsstufe 3 wenigstens eine weitere entsprechende Leistungsstufe 12, die eine gleichartige und parallel geschaltete Impulsbreitensteuerung aufweist und zum gleichzeitigen oder wahlweisen Betreiben eines weiteren Ozonisators 13 dient. Dabei werden mit besonderem Vorteil alle Leistungsstufen 3 und 12, Ozonisatoren 9 und 13 sowie die entsprechenden Lüfter 10 und 14 modulartig zu fertigen Baugruppen zusammengefaßt, wobei je nach der erforderlichen Maximalleistung alle diese Baugruppen in einem gemeinsamen Gehäuse untergebracht werden. Auf diese Weise kann problemlos, mit bloßer Luftkühlung und wegen der Modulbauweise preisgünstig praktisch jede beliebige Ozonmenge produziert werden, wobei der für einen Modul benötigte Raum vergleichsweise klein ist und mehrere Module in einem gemeinsamen Gehäuse untergebracht werden können.

Alle Module können mit demselben Oszillator 8 und demselben Netzteil 1 betrieben werden. Es ist jedoch auch möglich, jeden Modul mit einem besonderen Netzteil 1 zu versehen, um jeden Ozonisator im Bedarfsfall individuell einstellen und jedes Netzteil mittels eines zugehörigen Temperaturfühlers 11 regeln zu können. Dabei wird zweckmäßig die Impulsbreite der von jeder Impulsbreitensteuerung abgegebenen Impulse auf den für den Wirkungsgrad des zugehörigen Ozonisators günstigsten Wert eingestellt und die Ausgangsspannung des Netzteils zur Einstellung der erwünschten Ozonmenge benutzt. Abgesehen davon hat die Modulbauweise den wesentlichen Vorteil, daß der Ausfall eines einzelnen Moduls die Betriebsweise der übrigen Module nicht beeinträchtigt und daher die gesamte Anlage mit verminderter Leistung funktionsfähig bleibt.

Die Angaben in kV für die Hochspannungswerte sind als Effektivwerte zu verstehen.

## Patentansprüche

1. Schaltungsanordnung zum impulsförmigen Betreiben von einem oder mehreren Hochfrequenz-Ozonisatoren, mit wenigstens einem eine Gleichspannung erzeugenden Netzteil, mit einer der Zahl der Ozonisatoren entsprechenden Anzahl von Schaltkreisen zur Ableitung von elektrischen Impulsen aus der Gleichspannung und mit einer der Zahl der Ozonisatoren entsprechenden Anzahl von Hochspannungstransformatoren, denen primärseitig die von je einem der Schaltkreise erzeugten Impulse zugeführt werden und die sekundärseitig mit je einem Ozonisator verbunden sind, dadurch gekennzeichnet, daß die Schaltkreise je eine durch einen Oszillator (8) getriggerte Impulsbreitensteuerung (5, 6) enthalten.

2. Schaltungsanordnung nach Anspruch 1, dadurch gekennzeichnet, daß das Netzteil (1) aus einem mit den Primäspulen der Hochspannungstransformatoren (4) verbundenen Gleichspannungserzeuger besteht.

3. Schaltungsanordnung nach Anspruch 1 oder 2, dadurch gekennzeichnet, daß die Impulsbreitensteuerungen (5, 6) je einen elektronischen, den Stromfluß durch die Primärspulen der Hochspannungstransformatoren (4) sperrenden bzw. freigebenden, von je einem Monoflop (6) gesteuerten Schalter (5) aufweisen.

4. Schaltungsanordnung nach Anspruch 3, dadurch gekennzeichnet, daß der Takteingang jedes Monoflops (6) mit einem Oszillator (8) verbunden ist.

5. Schaltungsanordnung nach wenigstens einem der Ansprüche 1 bis 4, dadurch gekennzeichnet, daß ein für alle Ozonisatoren gemeinsames Netzteil (1) vorgesehen ist.

6. Schaltungsanordnung nach wenigstens einem der Ansprüche 1 bis 5, dadurch gekennzeichnet, daß ein für alle Impulsbreitensteuerungen (5, 6) gemeinsamer Oszillator (8) vorgesehen ist.

7. Schaltungsanordnung nach wenigstens einem der Ansprüche 1 bis 6, dadurch gekennzeichnet, daß jeder Schaltkreis einen Strombegrenzer (7) für den die Primärspule durchfließenden Strom enthält.

8. Schaltungsanordnung nach Anspruch 7, dadurch gekennzeichnet, daß die Strombegrenzer (7) je einen mit dem Rücksetzeingang des zugehörigen Monoflops (6) verbundenen, in den Stromkreis der Primärspule geschalteten, als Stromfühler dienenden Widerstand aufweisen.

9. Schaltungsanordnung nach wenigstens einem der Ansprüche 3 bis 8, dadurch gekennzeichnet, daß Monoflops (6) mit einstellbarer Schaltzeit vorgesehen sind.

10. Schaltungsanordnung nach wenigstens einem der Ansprüche 1 bis 9, dadurch gekennzeichnet, daß im Kühlluftstrom hinter dem Kühlkörper des Ozonisators (9) ein mit einem Steuereingang des Netzteils (1) verbundener Temperaturfühler (11) vorgesehen ist.

11. Schaltungsanordnung nach wenigstens einem der Ansprüche 1 bis 10, dadurch gekennzeichnet, daß sie je einen mit je einem Ozonisator (9) verbundenen Thermoschalter zur Selbstabschaltung bei Erreichen einer maximalen Ozonisatortemperatur aufweist.

12. Schaltungsanordnung nach wenigstens einem der Ansprüche 1 bis 11, dadurch gekennzeichnet, daß die Hochspannungstransformatoren (4) nach Art von Fernseh-Zeilentransformatoren ausgebildet sind.

## Claims

1. A circuit arrangement for the pulse-wise operation of one or more high frequency ozonisators, comprising at least one supply unit for producing a dc voltage, a number of circuits, corresponding to the number of ozonisators, for deriving electrical pulses from the dc voltage, and a number of high voltage transformers which corresponds to the number of ozonisators, the high voltage transformers being supplied on their primary side with the pulses generated by a respective one of the circuits and being connected on their secondary side to a respective ozonisator, characterised in that the circuits each include a pulse width control means (5, 6) triggered by an oscillator (8).

2. A circuit arrangement according to claim 1 characterised in that the supply unit (1) comprises a dc voltage generator connected to the primary windings of the high voltage transformers (4).

3. A circuit arrangement according to claim 1 or claim 2 characterised in that the pulse width control means (5, 6) each have an electronic switch (5) which is controlled by a respective monoflop (6) and which stops or permits the flow of current through the primary windings of the high voltage transformers (4).

4. A circuit arrangement according to claim 3 characterised in that the clock input of each monoflop (6) is connected to an oscillator (8).

5. A circuit arrangement according to at least one of claims 1 to 4 characterised in that there is provided a common supply unit (1) for all ozonisators.

6. A circuit arrangement according to at least one of claims 1 to 5 characterised in that there is provided a common oscillator (8) for all pulse width control means (5, 6).

7. A circuit arrangement according to at least one of claims 1 to 6 characterised in that each circuit includes a current limiter (7) for the current flowing through the primary winding.

8. A circuit arrangement according to claim 7 characterised in that the current limiters (7) each have a respective resistor which is connected to the reset input of the associated monoflop (6) and which is connected into the circuit of the primary winding and which serves as a current sensor.

9. A circuit arrangement according to at least one of claims 3 to 8 characterised in that there are provided monoflops (6) with an adjustable switching time.

10. A circuit arrangement according to at least one of claims 1 to 9 characterised in that a temperature sensor (11) connected to a control input of the supply unit (1) is provided in the cooling air flow downstream of the cooling member of the ozonisator (9).

11. A circuit arrangement according to at least one of claims 1 to 10 characterised in that it has a thermal circuit breaker respectively connected to each ozonisator (9), for automatically switching off same when a maximum ozonisator temperature is reached.

12. A circuit arrangement according to at least one of claims 1 to 11 characterised in that the high voltage transformers (4) are constructed in the manner of television line transformers.

## Revendications

1. Montage de circuits pour faire fonctionner par impulsions un ou plusieurs ozoniseurs haute fréquence, comportant un bloc d'alimentation secteur produisant une tension continue, un nombre de circuits, correspondant au nombre d'ozoniseurs, pour dériver des impulsions électriques de la tension continue, et un nombre de transformateurs haute fréquence correspondant au nombre d'ozoniseurs auxquels sont amenées du côté primaire les impulsions respectivement produites par l'un des circuits, et qui sont reliés côté secondaire respectivement à un ozoniseur, caractérisé en ce que les circuits comportent chacun une commande de durée d'impulsions (5, 6) déclenchée par un oscillateur (8).

2. Montage de circuits selon la revendication 1, caractérisé en ce que le bloc d'alimentation secteur est constitué par un générateur de tension continue relié aux bobines primaires des transformateurs haute tension (4).

3. Montage de circuits selon la revendication 1 ou 2, caractérisé en ce que les commandes de durée d'impulsions (5, 6) comportent chacune un commutateur électronique (5) commandé par une bascule monostable (6) arrêtant ou libérant le passage du courant dans les bobines primaires des transformateurs haute tension (4).

4. Montage de circuits selon la revendication 3, caractérisé en ce que l'entrée d'impulsions de chaque bascule monostable (6) est reliée à un oscillateur (8).

5. Montage de circuits selon au moins l'une des revendications 1 à 4, caractérisé en ce qu'on prévoit un bloc d'alimentation secteur commun (1) pour tous les ozoniseurs.

6. Montage de circuits selon au moins l'une des revendications 1 à 5, caractérisé en ce qu'on prévoit un oscillateur (8) commun pour toutes les commandes de durée d'impulsions (5, 6).

7. Montage de circuits selon au moins l'une des revendications 1 à 6, caractérisé en ce que chaque circuit comporte un limiteur de courant (7) pour le courant traversant la bobine primaire.

8. Montage de circuits selon la revendication 7, caractérisé en ce que les limiteurs de courant (7) comportent chacun une résistance servant de détecteur de courant, reliée à l'entrée de remise à l'état initial de la bascule monostable associée (6) et montée dans le circuit de la bobine primaire.

9. Montage de circuits selon au moins l'une des revendications 3 à 8, caractérisé en ce qu'on prévoit des bascules monostables (6) ayant un temps de basculement réglable.

10. Montage de circuits selon au moins l'une des revendications 1 à 9, caractérisé en ce qu'on prévoit dans le courant d'air de refroidissement derrière le corps de refroidissement de l'ozoniseur (9) un détecteur de température (11) relié à une entrée de commande du bloc d'alimentation secteur (1).

11. Montage de circuits selon au moins l'une des revendications 1 à 10, caractérisé en ce qu'il comporte un thermostat pour chaque ozoniseur (9) pour le mettre hors circuit lorsqu'une température maximale de l'ozoniseur est atteinte.

12. Montage de circuits selon au moins l'une des revendications 1 à 11, caractérisé en ce que les transformateurs haute tension (4) sont réalisés à la façon des convertisseurs de définition pour la télévision.

Fig.1.

Fig. 2.